# EUROPÄISCHE PATENTANMELDUNG

(11) **EP 3 731 150 A1**
(43) Veröffentlichungstag der Anmeldung: **28.10.2020**
(21) Anmeldenummer: 19171365.0
(22) Anmeldetag: 26.04.2019
(51) Int. Cl.: G06N 3/02, G06N 20/00, G06F 16/906

(54) **COMPUTERIMPLEMENTIERTE ANALYSE EINES VERHALTENS ODER EINES ZUSTANDS EINES SYSTEMS**

(71) Anmelder: Siemens Aktiengesellschaft, 80333 München (DE)
(72) Erfinder: Tolksdorf, Schirin, 90461 Nürnberg (DE); Peschke, Jörn, 90489 Nürnberg (DE)

(57) **Zusammenfassung**

Zur verbesserten Analyse eines Systems wird ein computerimplementiertes Verfahren angegeben, wobei
eine Vielzahl von Datenfolgen, welche ein Verhalten oder einen Zustand des Systems (6) beschreiben, mittels einer Datenschnittstelle (2) bereitgestellt wird.

Die Datenfolgen werden mittels eines Klassifizierungsmoduls (9) einer Klasse und einem zugehörigen Wahrscheinlichkeitskennwert zugeordnet. Mittels eines Grenzwertmoduls (10) wird ein Grenzwert ermittelt, sodass ein vorgegebener Anteil der Datenfolgen jeweils einen Wahrscheinlichkeitskennwert aufweist, der kleiner ist als der Grenzwert. Auf diejenigen Datenfolgen, deren Wahrscheinlichkeitskennwert kleiner ist als der Grenzwert, wird mittels eines Nachbearbeitungsmoduls (11) ein weiteres Klassifizierungsverfahren angewandt.

## Beschreibung

Die vorliegende Erfindung betrifft ein computerimplementiertes Verfahren zur Analyse eines Systems, wobei eine Vielzahl von Datenfolgen, welche ein Verhalten oder einen Zustand des Systems beschreiben, mittels einer Datenschnittstelle bereitgestellt werden und jeder der Datenfolgen mittels eines Klassifizierungsmoduls durch Anwendung eines Klassifizierungsverfahrens jeweils eine Klasse und ein zugehöriger Wahrscheinlichkeitskennwert zugeordnet werden. Die Erfindung betrifft ferner ein entsprechendes Analysesystem sowie ein Computerprogramm.

Bei der Analyse von Zuständen oder Verhaltensweisen von technischen, meteorologischen oder sonstigen komplexen Systemen mittels eines Klassifizierungsverfahrens können entsprechenden Daten, die das System beschreiben, bestimmte Klassen lediglich mit einer gewissen Wahrscheinlichkeit zugeordnet werden. Insbesondere kann es eine Ursache für fehlerhafte Zuordnungen sein, wenn eine nicht optimale Fenstergröße der zu analysierenden Daten gewählt wird. Bei einer zu kleinen Fenstergröße können Details innerhalb eines Verlaufs gelernt werden, welche eigentlich ganzheitlich betrachtet werden sollten. Bei zu großer Fenstergröße kann es passieren, dass zwei eigentlich verschiedene Klassen innerhalb eines Fensters liegen.

Selbst wenn jedoch eine passende Fenstergröße gewählt wird, kann an einem Klassenübergang das Problem auftreten, dass das jeweilige Fenster beide Klassen enthalten kann. Das Fenster kann dann einer der beiden Klassen zugeordnet werden, insbesondere derjenigen, zu der es mit einer höheren Wahrscheinlichkeit gehört. Dies bedeutet jedoch nicht notwendigerweise, dass die Zuordnung tatsächlich für alle Teile des Fensters korrekt oder optimal ist. An vielen Klassenübergängen gibt es entsprechende Unstimmigkeiten der Zugehörigkeit. Für die Analyse des Systems kann eine derartige unsaubere Klassifizierung zu Fehlern führen.

Vor diesem Hintergrund ist es eine Aufgabe der vorliegenden Erfindung, ein verbessertes Konzept zur computerimplementierten Analyse eines Systems mittels eines Klassifizierungsverfahrens anzugeben, bei dem die Wahrscheinlichkeit einer korrekten Klassenzuordnung erhöht wird.

Erfindungsgemäß wird diese Aufgabe durch ein Verfahren und ein Analysesystem sowie ein Computerprogramm nach den unabhängigen Ansprüchen gelöst. Vorteilhafte Weiterbildungen und weitere Ausführungsformen sind Gegenstand der abhängigen Ansprüche.

Das verbesserte Konzept beruht auf der Idee, einen Grenzwert automatisiert zu ermitteln, um diejenigen Datenfolgen zu identifizieren, bei denen eine Nachbearbeitung durch ein weiteres Klassifizierungsverfahren erforderlich oder sinnvoll ist und für diese Datenfolgen, insbesondere nur für diese Datenfolgen, eine Nachbearbeitung der Klassifizierung durchzuführen.

Gemäß einem ersten unabhängigen Aspekt des verbesserten Konzepts wird ein wenigstens teilweise computerimplementiertes Verfahren zur Analyse, insbesondere Zustandsanalyse, eines Systems, insbesondere eines technischen oder meteorologischen Systems, angegeben, wobei eine Vielzahl von, insbesondere zeitlich geordneten, Datenfolgen, welche ein Verfahren oder einen Zustand des Systems beschreiben, mittels einer Datenschnittstelle, insbesondere eines Computersystems, bereitgestellt wird. Jeder der Datenfolgen werden mittels eines Klassifizierungsmoduls durch Anwendung eines Klassifizierungsverfahrens, insbesondere auf die Datenfolgen, jeweils eine Klasse und ein zugehöriger Wahrscheinlichkeitskennwert zugeordnet. Mittels eines Grenzwertmoduls wird ein Grenzwert, insbesondere für die Wahrscheinlichkeitskennwerte, ermittelt, sodass ein vorgegebener, insbesondere prozentualer, Anteil der Datenfolgen jeweils einen Wahrscheinlichkeitskennwert aufweist, der kleiner ist als der Grenzwert. Auf diejenigen der Datenfolgen, deren Wahrscheinlichkeitskennwert kleiner ist als der Grenzwert, wird mittels eines Nachbearbeitungsmoduls ein weiteres Klassifizierungsverfahren angewandt.

Eine Datenfolge ist beispielsweise gegeben durch eine zeitlich geordnete Folge einer oder mehrerer Größen, insbesondere Messgrößen das System betreffend oder Prozessvariablen eines Prozesses, welcher durch das System durchgeführt wird. Mit anderen Worten handelt es sich um Zeitseriendaten.

Die Vielzahl von Datenfolgen beinhaltet drei oder mehr Datenfolgen. Dass die Datenfolgen ein Verhalten oder einen Zustand des Systems beschreiben, kann derart verstanden werden, dass die jeweiligen Größen, welche die Datenfolgen beinhalten, das Verhalten oder den Zustand des Systems beschreiben.

Bei dem Klassifizierungsmodul, dem Grenzwertmodul und dem Nachbearbeitungsmodul kann es sich insbesondere um Softwaremodule handeln. Das Nachbearbeitungsmodul und/oder das Grenzwertmodul können beispielsweise Teile des Klassifizierungsmoduls sein.

Insbesondere können die Verfahrensschritte, welche mittels des Klassifizierungsmoduls, des Grenzwertmoduls und/oder des Nachbearbeitungsmoduls mittels einer Recheneinheit ausgeführt werden, wobei die jeweiligen Verfahrensschritte durch die Recheneinheit unter Verwendung oder unter Einsatz des jeweiligen Softwarenmoduls erfolgt.

Bei der jeweiligen Klasse, welche der entsprechenden Datenfolge mittels des Klassifizierungsverfahrens zugeordnet wird, handelt es sich insbesondere um eine Klasse aus einer Vielzahl von, insbesondere vorgegebener, Klassen des Klassifizierungsverfahrens.

Hier und im Folgenden kann die Formulierung, dass eine Datenfolge einen Wahrscheinlichkeitskennwert aufweist, derart verstanden werden, dass dieser Datenfolge der Wahrscheinlichkeitskennwert zugeordnet wurde.

Bei dem jeweiligen zugehörigen Wahrscheinlichkeitskennwert handelt es sich insbesondere um einen Wahrscheinlichkeitskennwert, welcher eine Wahrscheinlichkeit betrifft, beschreibt oder quantifiziert, mit der die jeweilige der entsprechenden Datenfolge zugeordnete Klasse korrekt zugeordnet wurde.

Beispielsweise kann der Wahrscheinlichkeitskennwert eine Wahrscheinlichkeit für die korrekte Zuordnung der jeweiligen Klasse zu der jeweiligen Datenfolge beinhalten oder gleich der Wahrscheinlichkeit sein. Alternativ oder zusätzlich kann der Wahrscheinlichkeitskennwert eine Bewertungskennzahl beinhalten, welche die Wahrscheinlichkeit der korrekten Zuordnung betrifft oder beschreibt, insbesondere indirekt beschreibt. Bei der Bewertungskennzahl kann es sich beispielsweise um einen dB-Score, einen shiluoette-Score, einen bh-Score oder einen fs-Score handeln.

Das Klassifizierungsverfahren kann beispielsweise als überwachtes oder, vorzugsweise, als unüberwachtes Klassifizierungsverfahren ausgestaltet sein, insbesondere als überwacht oder unüberwacht trainiertes Klassifizierungsverfahren.

Die Anwendung des weiteren Klassifizierungsverfahrens auf eine gegebene Datenfolge kann beispielsweise die Anwendung des Klassifizierungsverfahrens auf die gegebene Datenfolge oder auf eine oder mehrere von der gegebenen Datenfolge abgeleitete Datenfolgen beinhalten, wobei insbesondere andere Klassifizierungsparameter verwendet werden können als bei der erstmaligen Anwendung des Klassifizierungsverfahrens auf die gegebene Datenfolge.

Bei dem System kann es sich um ein beliebiges System handeln, dessen Zustand oder Verhalten sich durch zeitabhängige, zeitlich veränderbare oder zeitlich veränderliche Größen, beispielsweise Messgrößen, Parameter oder Prozessvariablen beschreiben lässt. Insbesondere kann es sich bei dem System um ein technisches System handeln, wie beispielsweise eine Maschine, eine Anlage, insbesondere eine elektrische Maschine oder Anlage, einen Motor oder einen Generator oder einen Komplex aus zwei oder mehreren der der genannten und/oder weiterer Systeme, beispielsweise in einer Fertigung oder in einer Fabrik. Bei dem technischen System kann es sich auch um eine Anlage zur Energieerzeugung, beispielsweise eine Windkraftanlage, eine Solarenergieanlage oder eine Wasserkraftanlage handeln. Bei dem meteorologischen System kann es sich insbesondere um eine Atmosphäre oder einen Teil einer Atmosphäre, insbesondere der Erdatmosphäre, handeln. Das Verhalten beziehungsweise der Zustand des meteorologischen Systems, der mittels des verbesserten Konzepts analysiert werden kann, beinhaltet beispielsweise einen Wetter- oder Klimazustand beziehungsweise ein Wetter- oder Klimaverhalten.

Unter dem Begriff "Zustand" kann beispielsweise ein aktueller Zustand des Systems, beispielsweise ein Betriebszustand des technischen Systems, während eines jeweiligen Zeitraums, zu dem die Datenfolgen erzeugt, gemessen oder aufgenommen wurde oder dem die Datenfolgen zugeordnet werden können, verstanden werden.

Die Größen, welche von den Datenfolgen beinhaltet sind, können beispielsweise eine oder mehrere Messgrößen, insbesondere Zustandsgrößen oder Betriebsgrößen, des Systems, beispielsweise eine energiebezogene Größe, beispielsweise eine elektrische Leistungsaufnahme oder eine elektrische Stromstärke beinhalten. Die Daten können auch als Größe eine umgesetzte Wärme oder eine Wärmeleistung oder einen Druck oder eine Temperatur des Systems beinhalten. Im Falle eines meteorologischen Systems können die Daten insbesondere eine Temperatur, eine Niederschlagsmenge, eine Niederschlagswahrscheinlichkeit, eine Windstärke, eine Luftfeuchtigkeit, einen Luftdruck oder eine andere meteorologische Größe beinhalten.

Das Verhalten des Systems kann beispielsweise eine zeitliche Abfolge von Zuständen des Systems oder eine Signatur in den Daten beinhalten.

Durch das Ermitteln des Grenzwertes werden diejenigen der Datenfolgen identifiziert, denen mit der vergleichsweise geringsten Wahrscheinlichkeit die korrekte Klasse zugeordnet wurde. Der Grenzwert stellt einen Grenzwert dafür dar, dass eine der Datenfolgen mit einer derart geringen Wahrscheinlichkeit korrekt zugeordnet wurde, dass eine Nachbearbeitung erforderlich oder sinnvoll erscheint.

Insbesondere werden nur diejenigen Datenfolgen, deren Wahrscheinlichkeitskennwert kleiner ist als der Grenzwert, der Nachbearbeitung durch Anwendung des weiteren Klassifizierungsverfahrens unterzogen. Dadurch können für diese Datenfolgen der resultierende angepasste Wahrscheinlichkeitskennwert und damit die Qualität und/oder Zuverlässigkeit der gesamten Klassifizierung beziehungsweise der Analyse des Zustands oder des Verhaltens des Systems verbessert werden. Gleichzeitig wird die Nachbearbeitung nur für diejenigen Datenfolgen durchgeführt, für die eine Verbesserung des Wahrscheinlichkeitskennwerts erwartet werden kann.

Der vorgegebene Anteil von Datenfolgen, mittels denen der Grenzwert bestimmt wird, kann auf empirischen Erfahrungen beruhen und/oder iterativ angepasst werden.

Gemäß dem Verfahren nach dem verbesserten Konzept können trotz passender Fenstergröße für die Klassifizierung auftretende fehlerhafte Zuordnungen an Klassenübergängen, vollständig oder teilweise korrigiert oder kompensiert werden. Insbesondere kann die fehlerhafte Zuordnung an den Klassenübergängen für einen konkreten Anwendungsfall in ausreichendem Maße korrigiert werden.

Nach dem verbesserten Konzept wird der Grenzwert applikationsspezifisch automatisiert bestimmt, sodass eine manuelle Abschätzung einer Grenze für den Wahrscheinlichkeitskennwert nicht erforderlich ist. Auch eine manuelle Bewertung des Klassifizierungsergebnisses, insbesondere einer Qualität oder Zuverlässigkeit des Klassifizierungsergebnisses, ist nicht erforderlich, was eine hochgradige Automatisierung der Analyse zulässt.

Gemäß zumindest einer Ausführungsform des Verfahrens zur Analyse des Systems wird jede der Datenfolgen mittels eines Vorverarbeitungsmoduls vorverarbeitet, wobei die Vorverarbeitung insbesondere eine Merkmalsextraktion und/oder eine statistische Auswertung der jeweiligen Datenfolge beinhalten kann.

Die Vorverarbeitung kann vor der Anwendung des Klassifizierungsverfahrens mittels des Klassifizierungsmoduls erfolgen, wobei das Klassifizierungsverfahren dann auf die entsprechenden vorverarbeiteten Datenfolgen angewendet wird. Alternativ kann die Vorverarbeitung auch Teil des Klassifizierungsverfahrens sein. Insbesondere kann das Vorverarbeitungsmodul ein Teil des Klassifizierungsmoduls sein.

Die Erläuterungen zu dem Klassifizierungsmodul, dem Grenzwertmodul und dem Nachbearbeitungsmodul gelten analog auch für das Vorverarbeitungsmodul sowie für weitere im Folgenden eingeführte Module.

Gemäß zumindest einer Ausführungsform werden die Datenfolgen entsprechend ihres jeweiligen Wahrscheinlichkeitskennwerts, insbesondere aufsteigend oder absteigend, sortiert. Mittels der sortierten Datenfolgen wird eine Gruppe derjenigen Datenfolgen mit den geringsten Wahrscheinlichkeitskennwerten identifiziert, sodass der Anteil der Gruppe an der Vielzahl von Datenfolgen dem vorgegebenen Anteil entspricht. Ein Maximum der Wahrscheinlichkeitskennwerte der Gruppe von Datenfolgen wird als Grenzwert bestimmt.

Zur Identifikation der Gruppe wird insbesondere diejenige Datenfolge mit dem geringsten Wahrscheinlichkeitskennwert aller Datenfolgen der Vielzahl von Datenfolgen ausgewählt. Dann werden ausgehend davon anhand einer sortierten Liste der sortierten Datenfolgen solange alle Datenfolgen mit aufsteigendem Wahrscheinlichkeitskennwert identifiziert, solange ein Quotient aus der Anzahl der identifizierten Datenfolgen und der Anzahl der Datenfolgen der Vielzahl von Datenfolgen kleiner oder gleich dem vorgegebenen Anteil ist. Der Wahrscheinlichkeitskennwert der zuletzt identifizierten Datenfolge wird dann als Grenzwert gewählt beziehungsweise bestimmt.

Die Gruppe der Datenfolgen wird insbesondere derart identifiziert, dass der Anteil der Gruppe an der Vielzahl von Datenfolgen dem vorgegebenen Anteil bis auf eine vorgegebene Toleranz entspricht oder am besten entspricht.

Auf diese Weise können die "am schlechtesten" klassifizierten Folgen, also diejenigen Datenfolgen, die mit der geringsten Wahrscheinlichkeit korrekt zugeordnet wurden, identifiziert werden und die Nachbearbeitung gezielt auf diese Gruppe von Datenfolgen beschränkt werden. Damit wird ein Rechenaufwand für die Nachbearbeitung reduziert.

Die Schritte des Sortierens der Datenfolgen, des Identifizierens der Gruppe und des Bestimmens des Grenzwertes werden jeweils insbesondere mittels des Grenzwertmoduls durchgeführt.

Gemäß zumindest einer Ausführungsform wird zum Ermitteln des Grenzwertes ein Testwert festgelegt. Es wird ein Quotient aus der Anzahl von Datenfolgen, denen ein Wahrscheinlichkeitskennwert zugeordnet wurde, der kleiner ist als der Testwert, und der Anzahl aller Datenfolgen der Vielzahl berechnet. Der Testwert wird als Grenzwert bestimmt, falls der Quotient gleich, oder bis auf eine vorgegebene Toleranz gleich, dem vorgegebenen Anteil ist. Ist der Quotient nicht bis auf die Toleranz gleich dem vorgegebenen Anteil, so wird der Testwert verkleinert und erneut der Quotient wie beschrieben berechnet und mit dem vorgegebenen Anteil verglichen.

Insbesondere können die beschriebenen Schritte des Festlegens des Testwerts, des Berechnens des Quotienten und des entsprechenden Vergleichs mit dem vorgegebenen Anteil iterativ wiederholt werden, bis der Quotient gleich oder bis auf den Toleranzwert gleich dem vorgegebenen Anteil ist. Ein initialer Testwert kann dabei mit dem maximalen Wahrscheinlichkeitskennwert der Datenfolgen oder mit einem maximal möglichen Wahrscheinlichkeitskennwert, beispielsweise 100 Prozent, gleichgesetzt werden. In jeder Iteration wird der Testwert beispielsweise verringert.

Solche Ausführungsformen stellen insbesondere eine Alternative zur Ermittlung des Grenzwertes anhand der sortierten Liste von Datenfolgen dar.

Gemäß zumindest einer Ausführungsform beinhaltet die Anwendung des weiteren Klassifizierungsverfahrens auf eine der Datenfolgen, deren Wahrscheinlichkeitskennwert kleiner ist als der Grenzwert, ein Aufteilen der jeweiligen Datenfolge in wenigstens zwei Unterfolgen, insbesondere mittels des Nachbearbeitungsmoduls, und ein Zuordnen einer Klasse und eines zugehörigen Wahrscheinlichkeitskennwertes zu jeder der wenigstens zwei Unterfolgen, insbesondere mittels des Nachbearbeitungsmoduls.

Zur Zuordnung der Klasse zu einer Unterfolge kann insbesondere die jeweilige Unterfolge entsprechend wie oben beschrieben mittels des Vorbearbeitungsmoduls vorbearbeitet werden.

Vorzugsweise wird die Datenfolge, auf die das weitere Klassifizierungsverfahren angewandt wird, in wenigstens drei Unterfolgen unterteilt.

Durch das Aufteilen der jeweiligen Datenfolge in Unterfolgen kann die Zuordnung der Klasse mit höherer Auflösung erfolgen, sodass sich für die Unterfolgen insbesondere der Wahrscheinlichkeitskennwert gegenüber der aufgeteilten Datenfolge zugeordneten Wahrscheinlichkeitskennwerts erhöht. Insbesondere kann sich der Wahrscheinlichkeitskennwert dann erhöhen, wenn sich die Datenfolge beziehungsweise die entsprechende Unterfolge nahe an einem Klassenübergang befindet. Beispielsweise kann die Zuordnung der Datenfolge inkorrekt erfolgt sein, da die Länge der Datenfolge statisch festgelegt sein kann, und demzufolge die Unterfolgen der Datenfolge zu unterschiedlichen Klassen gehören, der Datenfolge aber nur eine gemeinsame Klasse zugeordnet wurde.

Insbesondere kann es ein Indiz dafür sein, dass die Datenfolge aufgrund eines Klassenübergangs falsch zugeordnet wurde oder zumindest teilweise falsch zugeordnet wurde, wenn sich für eine oder mehrere Unterfolgen der Wahrscheinlichkeitskennwert signifikant erhöht.

Gemäß zumindest einer Ausführungsform wird der vorgegebene Anteil in Abhängigkeit von einem Ergebnis des weiteren Klassifizierungsverfahrens mittels eines Überprüfungsmoduls angepasst. Mittels des Grenzwertmoduls wird ein angepasster Grenzwert ermittelt, sodass ein Anteil der Datenfolgen, welcher dem angepassten Anteil entspricht, jeweils einen Wahrscheinlichkeitskennwert aufweist, der kleiner ist als der angepasste Grenzwert. Auf diejenigen der Datenfolgen, deren Wahrscheinlichkeitskennwert kleiner ist als der angepasste Grenzwert, wird mittels des Nachbearbeitungsmoduls das weitere Klassifizierungsverfahren, insbesondere erneut, angewandt.

Auf die Ausführungen zur Ermittlung des Grenzwertes und zur Anwendung des weiteren Klassifizierungsverfahrens oben wird verwiesen, da diese analog auch für den angepassten Grenzwert und die entsprechenden Schritte gelten.

Insbesondere wird der vorgegebene Anteil in Abhängigkeit von einem Vergleich des Ergebnisses des weiteren Klassifizierungsverfahrens mit einem vorherigen Ergebnis des Klassifizierungsverfahrens angepasst, insbesondere in Abhängigkeit eines Vergleichs der entsprechenden Klassenwahrscheinlichkeiten, insbesondere von Unterfolgen und denjenigen Datenfolgen, aus denen die entsprechenden Unterfolgen hervorgehen.

Die Schritte des Anpassens des vorgegebenen Anteils, des Ermittelns des angepassten Grenzwerts und des Anwendens des weiteren Klassifizierungsverfahrens auf diejenigen Datenfolgen, deren Wahrscheinlichkeitskennwert kleiner ist als der angepasste Grenzwert, können insbesondere iterativ wiederholt werden, beispielsweise solange, bis ein Ergebnis des weiteren Klassifizierungsverfahrens nach einem vorgegebenen Kriterium als positiv oder ausreichend angesehen werden kann.

Gemäß solcher Ausführungsformen kann, auch wenn der initial vorgegebene Anteil nicht optimal ausgewählt wurde, dieser iterativ angepasst werden, sodass das Endergebnis des Analyseverfahrens nach dem verbesserten Konzept nicht notwendigerweise von einer gegebenenfalls empirisch motivierten Wahl des vorgegebenen Anteils abhängt. Insbesondere ist eine manuelle Korrektur des vorgegebenen Anteils nicht erforderlich, was auch zu einer Qualitätsverbesserung des gesamten Analyseergebnisses führen kann.

Gemäß zumindest einer Ausführungsform, insbesondere einer Ausführungsform, in der die Datenfolgen, auf die das weitere Klassifizierungsverfahren angewendet wird, in die jeweiligen Unterfolgen aufgeteilt werden wird ein Wahrscheinlichkeitskennwert wenigstens einer der wenigstens zwei Unterfolgen, insbesondere aller der wenigstens zwei Unterfolgen, insbesondere aller Unterfolgen aller nachbearbeiteter Datenfolgen, mit dem Wahrscheinlichkeitskennwert der Datenfolge verglichen, welche in die jeweiligen wenigstens zwei Unterfolgen aufgeteilt wurde. Der vorgegebene Anteil wird in Abhängigkeit von einem Ergebnis des Vergleichs angepasst.

Durch den Vergleich der Wahrscheinlichkeitskennwerte kann herausgefunden werden, ob ein schlechter Wahrscheinlichkeitskennwert aufgrund eines Klassenübergangs zustande gekommen ist oder aufgrund nicht optimaler Klassifizierungsparameter, wie beispielsweise nicht optimal gewählten oder gewichteten statistischen Kenngrößen oder einer nicht optimalen Datenskalierung.

Beispielsweise handelt es sich bei der Ursache für die ursprüngliche schlechte Klassifizierung der Datenfolge mit großer Wahrscheinlichkeit um einen Klassenübergang, wenn folgendes Beispielszenario vorliegt: Die Datenfolge wurde beispielsweise in drei Unterfolgen aufgeteilt. Für eine Unterfolge verbessert sich der Wahrscheinlichkeitskennwert deutlich. Für eine zweite, zeitlich nach der ersten Unterfolge liegende Unterfolge verschlechtert sich der Wahrscheinlichkeitskennwert oder verbessert sich zumindest nicht deutlich. Für eine dritte, zeitlich nach der zweiten Unterfolge liegende Unterfolge verbessert sich der Wahrscheinlichkeitskennwert wiederum deutlich.

Bei dem Beispielszenario werden die erste und die dritte Unterfolge unterschiedlichen Klassen zugeordnet.

Insbesondere kann für jede der Datenfolgen, auf die das weitere Klassifizierungsverfahren angewendet wurde, bestimmt werden, ob der vergleichsweise geringe Wahrscheinlichkeitskennwert durch einen Klassenübergang verursacht wurde oder nicht. Anhand dieser Information kann der vorgegebene Anteil vergrößert oder verkleinert werden. Beispielsweise kann der vorgegebene Anteil vergrößert werden, wenn die Anzahl von Datenfolgen, deren Zuordnung aufgrund eines Klassenübergangs schlecht war, einen vorgegebenen ersten Schwellwert überschreitet oder wenn dies für alle nachbearbeiteten Datenfolgen der Fall war. In diesem Fall ist es wahrscheinlich, dass weitere Datenfolgen aufgrund von Klassenübergängen schlecht klassifiziert wurden, auf die jedoch das weitere Klassifizierungsverfahren nicht angewendet wurde.

Entsprechend kann der vorgegebene Anteil verkleinert werden, wenn die Anzahl, insbesondere die relative Anzahl, von Datenfolgen, deren schlechte Klassifizierung auf einen Klassenübergang zurückgeht, kleiner ist als ein vorgegebener zweiter Schwellwert, beispielsweise zehn Prozent. In diesem Fall ist es wahrscheinlich, dass viele Datenfolgen dem weiteren Klassifizierungsverfahren unterzogen wurden, obwohl die Ursache der schlechten Bewertung nicht in einem Klassenübergang lag.

Gemäß zumindest einer Ausführungsform wird mit dem Wahrscheinlichkeitskennwert einer Datenfolge oder einer Unterfolge eine Wahrscheinlichkeit dafür beschrieben, dass die der jeweiligen Datenfolge oder Unterfolge untergeordnete Klasse korrekt zugeordnet wurde.

Je nach Klassifizierungsverfahren, das eingesetzt wird, kann die Wahrscheinlichkeit für die korrekte Zuordnung direkt ausgegeben werden oder nicht. In letzterem Fall kann ein Bewertungskennwert, beispielsweise eine dB-Score, shiluoette-Score, bh-Score oder fs-Score, als Wahrscheinlichkeitskennwert herangezogen werden.

Gemäß zumindest einer Ausführungsform beinhaltet das Klassifizierungsmodul ein Modul zum Durchführen eines Verfahrens zum maschinellen Lernen, beispielsweise eine Stützvektormaschine (englisch: "Support Vector Machine"), ein künstliches neuronales Netz, ein faltendes (englisch: "convolutive") neuronales Netz und/oder einen k-means Klassifizierer, beispielsweise einen Fuzzy k-means Klassifizierer, zur Anwendung des Klassifizierungsverfahrens. Bei der Stützvektormaschine, dem neuronalen Netz oder dem Klassifizierer handelt es sich insbesondere um Softwaremodule, insbesondere um Untermodule des Klassifizierungsmoduls.

Gemäß zumindest einer Ausführungsform wird die Vielzahl von Datenfolgen mittels einer Steuereinheit zur Steuerung des Systems erzeugt und/oder bereitgestellt oder die Vielzahl von Datenfolgen wird mittels einer Datenbank des Systems bereitgestellt.

Die Steuereinheit kann insbesondere eine programmierbare Steuerung, insbesondere einer Maschine oder einer Anlage des Systems, beinhalten.

Bei den Daten der Datenfolge kann es sich in solchen Ausführungsformen insbesondere um eine oder mehrere Prozessvariablen oder Betriebsparameter handeln.

Gemäß zumindest einer Ausführungsform wird mittels einer Sensorvorrichtung, insbesondere des Analysesystem oder des zu analysierenden Systems, eine Messgröße des Systems gemessen, um die Vielzahl von Datenfolgen zu erzeugen.

Gemäß zumindest einer Ausführungsform werden für jede der Datenfolgen wenigstens zwei statistische Kenngrößen mittels des Vorbearbeitungsmoduls gemäß einem vorgegebenen Parametersatz bestimmt. Die statistischen Kenngrößen werden mittels des Vorbearbeitungsmoduls gemäß dem Parametersatz gewichtet und die Klasse sowie der Wahrscheinlichkeitskennwert werden gemäß dem Parametersatz und basierend auf den gewichteten statistischen Kenngrößen der jeweiligen Datenfolge dieser zugeordnet. Die statistischen Kenngrößen können insbesondere skalierte Kenngrößen beinhalten, wobei der Parametersatz beispielsweise einen oder mehrere Skalierungsparameter für die Skalierung beinhalten kann. Zudem kann der Parametersatz einen oder mehrere Gewichtungsfaktoren zur Gewichtung der statistischen Kenngrößen und/oder einen oder mehrere Klassifizierungsparameter, insbesondere eine Anzahl von Klassen, zur Anwendung des Klassifizierungsverfahrens beinhalten.

Der vorgegebene Parametersatz kann insbesondere durch ein Trainingsverfahren für das Klassifizierungsverfahren ermittelt werden oder empirisch bestimmte oder sonstige vorgegebene Parameter enthalten.

Die statistischen Kenngrößen entsprechen extrahierten Merkmalen der Datenfolge. Diese extrahierten Merkmale stellen beispielsweise charakteristische Kenngrößen dar, die eine effiziente Klassifizierung erlauben. Durch die Gewichtung der Kenngrößen können je nach Aufgabenstellung für die Klassifizierung unterschiedliche Merkmale oder Merkmalsblöcke unterschiedlich stark berücksichtigt werden.

Gemäß zumindest einer Ausführungsform sind zwei oder mehrere der wenigstens zwei statistischen Kenngrößen einem vorgegebenen Merkmalsblock zugeordnet und die Gewichtung der zwei oder mehr dem Merkmalsblock zugeordneten statistischen Kenngrößen werden mit einem gemeinsamen Gewichtungsfaktor des Parametersatzes durchgeführt.

Durch die Zusammenfassung ähnlicher Auswirkungen der Kenngrößen eines Merkmalsblocks können eine Komplexität des Rechenverfahrens und ein Rechenaufwand reduziert werden.

Gemäß zumindest einer Ausführungsform wird mittels eines Evaluierungsmoduls das Verhalten oder der Zustand des Systems basierend auf den Klassen, welche den Datenfolgen zugeordnet wurden, und/oder basierend auf einem Ergebnis des weiteren Klassifizierungsverfahrens, insbesondere basierend auf den Klassen, welche den jeweiligen Unterfolgen zugeordnet wurden, ausgewertet.

Die Auswertung kann beispielsweise ein Bestimmen oder Überwachen des Zustands oder Verhaltens oder ein Bewerten des Zustands oder des Verhaltens beinhalten.

Gemäß einem weiteren unabhängigen Aspekt des verbesserten Konzepts wird ein Analysesystem mit einem Computersystem angegeben. Das Computersystem weist eine Datenschnittstelle auf, die dazu eingerichtet ist, eine Vielzahl von Datenfolgen, welche ein Verhalten oder einen Zustand eines Systems beschreiben, zu erfassen. Das Computersystem weist auch eine Recheneinheit auf, die dazu eingerichtet ist, jeder der Datenfolgen mittels des Klassifizierungsmoduls durch Anwendung eines Klassifizierungsverfahrens, insbesondere auf die jeweiligen Datenfolge, jeweils eine Klasse und einen zugehörigen Wahrscheinlichkeitskennwert zuzuordnen. Die Recheneinheit ist ferner dazu eingerichtet, mittels eines Grenzwertmoduls einen Grenzwert zu ermitteln, sodass ein vorgegebener Anteil der Datenfolgen jeweils einen Wahrscheinlichkeitskennwert aufweist, der kleiner ist als der Grenzwert. Die Recheneinheit ist dazu eingerichtet, auf diejenigen der Datenfolgen, deren Wahrscheinlichkeitskennwert kleiner ist als der Grenzwert, mittels eines Nachbearbeitungsmoduls ein weiteres Klassifizierungsverfahren anzuwenden.

Weitere Ausführungsformen des Analysesystems ergeben sich unmittelbar aus den verschiedenen Ausgestaltungsformen des Verfahrens nach dem verbesserten Konzept und umgekehrt. Insbesondere kann das Analysesystem zur Ausführung eines Verfahrens nach dem verbesserten Konzept eingerichtet oder programmiert sein oder führt ein Verfahren nach dem verbesserten Konzept aus.

Gemäß einem weiteren unabhängigen Aspekt des verbesserten Konzepts wird ein Computerprogramm angegeben, welches Befehle aufweist. Bei Ausführung des Computerprogramms durch ein Computersystem, insbesondere ein Computersystem eines Analysesystems gemäß dem verbesserten Konzept, veranlassen die Befehle das Computersystem dazu, ein Verfahren zur Analyse eines Systems nach dem verbesserten Konzept durchzuführen.

Die Erfindung wird im Folgenden anhand konkreter Ausführungsbeispiele und zugehöriger schematischer Zeichnungen näher erläutert. In den Figuren sind gleiche oder funktionsgleiche Elemente mit gleichen Bezugszeichen versehen. Die Beschreibung gleicher oder funktionsgleicher Elemente wird gegebenenfalls nicht notwendigerweise in verschiedenen Figuren wiederholt. In den Figuren zeigen
- FIG 1: eine schematische Darstellung einer beispielhaften Ausführungsform eines Analysesystems nach dem verbesserten Konzept;
- FIG 2: ein Computersystem einer weiteren beispielhaften Ausführungsform eines Analysesystems nach dem verbesserten Konzept; und
- FIG 3: verschiedene Aspekte einer beispielhaften Ausführungsform eines Verfahrens nach dem verbesserten Konzept.

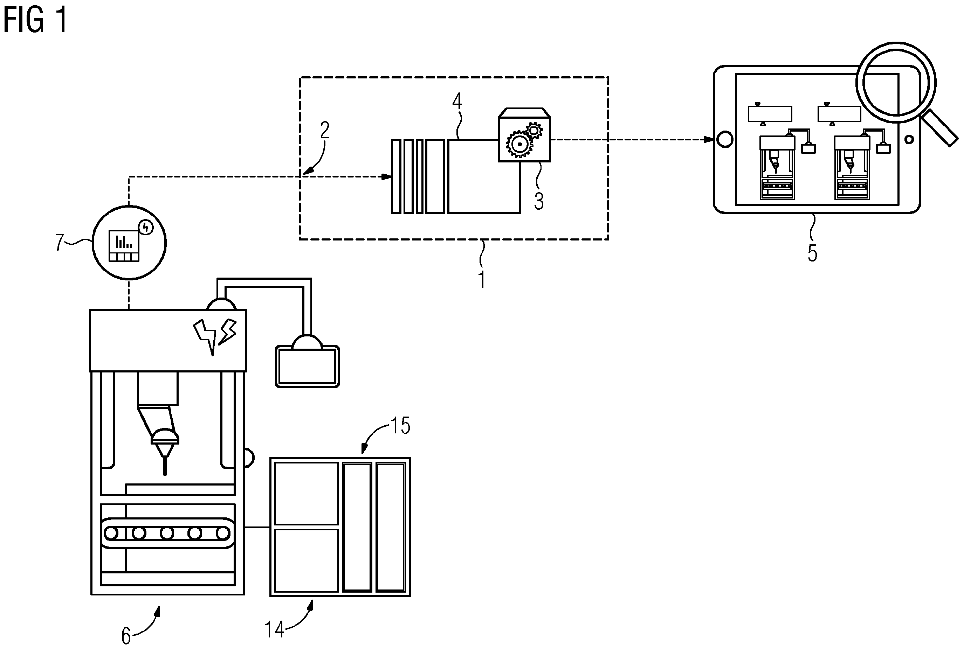

In FIG 1 ist eine beispielhafte Ausführungsform eines Analysesystems gemäß dem verbesserten Konzept m dargestellt.

Ein zu analysierendes System 6 ist in FIG 1 beispielhaft als elektrisch angetriebene Maschine 6 dargestellt. Ein Computersystem 1 des Analysesystems ist mit der Maschine 6 über einen Sensor 7, welcher beispielsweise ein Energiemeter enthält, verbunden. Das Computersystem 1 weist eine Recheneinheit 3 auf, beispielsweise wenigstens einen Mikroprozessor 4 enthaltend, sowie zur Verbindung der Recheneinheit 3 mit dem Sensor 7 eine Datenschnittstelle 2. Das Computersystem 1 ist beispielsweise mit einem Ein-und Ausgabegerät 5 gekoppelt.

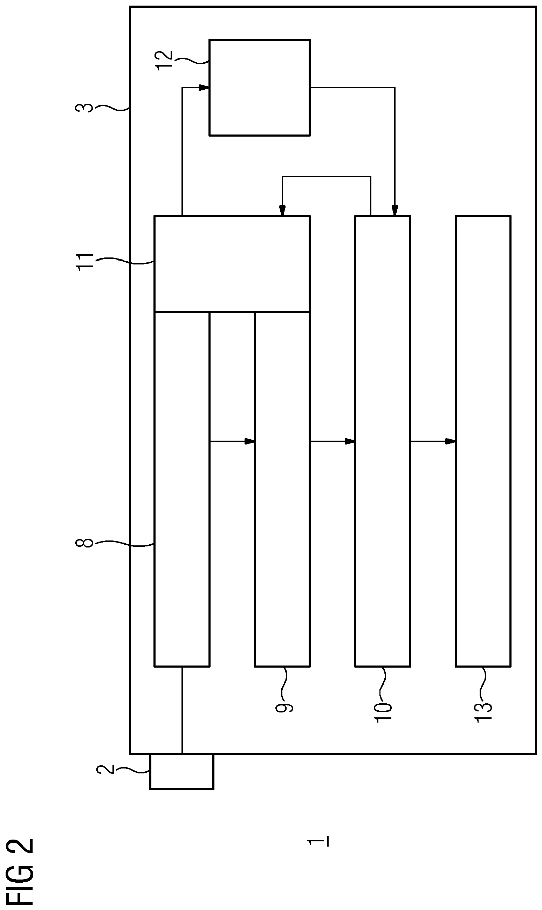

Eine Funktionsweise des Analysesystems beziehungsweise ein Verfahren zur Analyse des Systems 6 nach dem verbesserten Konzept wird mit Bezug auf FIG 2 näher erläutert. In FIG 2 ist ein Blockdiagramm des Computersystems 1, insbesondere der Recheneinheit 3, gezeigt.

Die Recheneinheit 3 weist beispielsweise verschiedene Softwaremodule 8, 9, 10, 11, 12, 13 auf, die beispielsweise auf einem oder mehreren Speichermedien der Recheneinheit 3 gespeichert sind.

Insbesondere kann die Recheneinheit 3 ein mit der Datenschnittstelle 2 gekoppeltes Vorverarbeitungsmodul 8, ein

Klassifizierungsmodul 9, ein Grenzwertmodul 10, ein Nachbearbeitungsmodul 11, ein Überprüfungsmodul 12 und/oder ein Evaluierungsmodul 13 beinhalten.

Mittels des Sensors 7 kann eine wiederholte, beispielsweise kontinuierliche, Aufnahme einer Messgröße, insbesondere einer elektrischen Leistungsaufnahme und/oder einer Stromstärke, der Maschine 6 erfolgen und die aufgenommene Messgröße mittels der Datenschnittstelle 2 an die Recheneinheit 3, insbesondere das Vorverarbeitungsmodul 8, übertragen werden. Die Messdaten, also die aufgenommenen Messgrößen, können beispielsweise in einem Speichermedium der Recheneinheit 3 gespeichert werden. Die aufgenommenen Messgrößen können beispielsweise entsprechend einem vorgegebenen Abschnittsparameter, insbesondere einer Abschnittslänge, in eine Vielzahl von Datenfolgen aufgeteilt werden, wobei jede Datenfolge zeitlich geordnete Messgrößen beinhaltet und die Datenfolgen selbst ebenfalls zeitlich geordnet werden können.

Für jede der Datenfolgen wird beispielsweise mittels des Vorverarbeitungsmoduls 8 eine Merkmalsextraktion vorgenommen, wobei wenigstens zwei statistische Kenngrößen der jeweiligen Datenfolge, beispielsweise ein Mittelwert, eine Standardabweichung, ein Maximalwert, eine Summe der Werte der Datenfolge oder eine sonstige statistische Kenngröße, bestimmt werden.

Die genannten Kenngrößen können optional mittels eines vorgegebenen Skalierungsparameters skaliert werden. Die skalierten Kenngrößen können beispielsweise einem oder mehreren Merkmalsblöcken zugeordnet sein und die statistischen Kenngrößen oder die Merkmalsblöcke können gemäß einem vorgegebenen Satz von Gewichtungsfaktoren gewichtet werden.

Die extrahierten Merkmale, insbesondere die statistischen Kenngrößen, der Datenfolgen werden dem Klassifizierungsmodul 9 übergeben, mittels welchem jeder der Datenfolgen eine jeweilige Klasse und ein zugehöriger Wahrscheinlichkeitskennwert zugeordnet werden.

Danach kann mittels des Grenzwertmoduls 10 ein Grenzwert ermittelt werden, sodass ein vorgegebener prozentualer Anteil der Datenfolgen jeweils einen Wahrscheinlichkeitskennwert aufweist, der kleiner ist als der Grenzwert. Der vorgegebene Anteil kann beispielsweise basierend auf empirischer Erfahrung oder Abschätzung vorgegeben werden und beispielsweise fünf Prozent entsprechen. Der vorgegebene Anteil gibt an, welcher Anteil von Datenfolgen, welche im Folgenden auch als Fenster bezeichnet werden, derart nahe an einem Klassenübergang liegen, dass eine fehlerhafte Zuordnung der Klasse aufgrund des Klassenübergangs wahrscheinlich ist. Der vorgegebene Anteil kann auch von einem Benutzer individuell vorgegeben werden, beispielsweise wenn dieser eine bessere Einschätzung über eine Häufigkeit von Klassenübergängen, welche beispielsweise im zeitlichen Verlauf der Datenfolgen erkennbar sein kann, abgeben kann.

Initial wird der Grenzwert beispielsweise auf 100 Prozent gesetzt und dann berechnet, wie viele der Fenster einen Wahrscheinlichkeitskennwert unterhalb des Grenzwerts haben. Beispielsweise können 90 Prozent der Fenster einen Wahrscheinlichkeitskennwert unterhalb von 100 Prozent aufweisen. Anschließend kann der Grenzwert verringert werden, beispielsweise um ein Prozent, hier also zunächst auf 99 Prozent. Es wird wiederum berechnet, wie viele Fenster einen Wahrscheinlichkeitskennwert unterhalb dieser Grenze aufweisen. Die beschriebenen Schritte können wiederholt werden, bis der Anteil der Fenster, die einen Wahrscheinlichkeitskennwert unterhalb des Grenzwerts aufweisen, gleich oder näherungsweise gleich dem vorgegebenen Anteil von hier fünf Prozent ist. Der resultierende zuletzt verwendete Grenzwert kann als ermittelter Grenzwert im Weiteren verwendet werden.

Das beschriebene Verfahren zur Ermittlung des Grenzwertes nutzt aus, dass die Wahrscheinlichkeit für eine korrekte Zuordnung der Klassen an Klassenübergängen am schlechtesten ist, da effektiv ein Fenster analysiert wird, welches eigentlich als Ganzes nicht eindeutig einer Klasse zuordenbar ist. Aus diesem Grund bleiben bei dem Verfahren diejenigen, beispielsweise fünf Prozent, der Fenster oder Datenfolgen übrig, die am schlechtesten klassifiziert wurden.

Die Bestimmung des Grenzwertes beziehungsweise der am schlechtesten klassifizierten Fenster kann gegebenenfalls auch mittels einer sortierten Tabelle erfolgen, von welcher der höchste Wert des Wahrscheinlichkeitskennwertes der fünf Prozent am schlechtesten klassifizierten Fenster als Grenzwert gesetzt wird.

Nach der Bestimmung des Grenzwertes kann auf diejenigen Fenster, deren Wahrscheinlichkeitskennwert kleiner ist als der Grenzwert, mittels eines Nachbearbeitungsmoduls 11 ein weiteres Klassifizierungsverfahren angewendet werden. Durch das weitere Klassifizierungsverfahren können die betreffenden Fenster also nachbearbeitet werden.

Die Nachbearbeitung an den Klassenübergängen kann beispielsweise durch eine Aufteilung des entsprechenden Fensters in kleinere Unterfenster beziehungsweise der Datenfolge in jeweilige Unterfolgen durchgeführt werden. Die Unterfolgen können beispielsweise nochmals in dem Vorverarbeitungsmodul 8 vorverarbeitet werden wie oben beschrieben. Anschließend können die Unterfolgen nochmals mittels des Klassifizierungsmoduls 9 der dem Klassifizierungsverfahren unterzogen werden.

Durch die Aufteilung in kleinere Unterfenster und die erneute Klassifizierung wird beispielsweise zumindest für einige Unterfolgen der Wahrscheinlichkeitskennwert über den Grenzwert verbessert. Im besten Fall bleibt nur noch ein Unterfenster übrig, welches immer noch den Klassenübergang beinhaltet, und alle anderen Unterfenster wären mit einer ausreichend hohen Wahrscheinlichkeit entweder der einen oder der anderen Klasse zugeordnet. Die Nachbearbeitung kann beispielsweise während der Laufzeit nach der Klassifizierung durchgeführt werden, bevor die Ergebnisse an den Anwender oder ein anderes System übergeben werden.

Durch die Aufteilung in die Unterfolgen kann es gegebenenfalls notwendig sein, ein Zeitstempel mit dem Ergebnis auszugeben, damit die abweichende Fenstergröße in den nachfolgenden Schritten berücksichtigt werden kann.

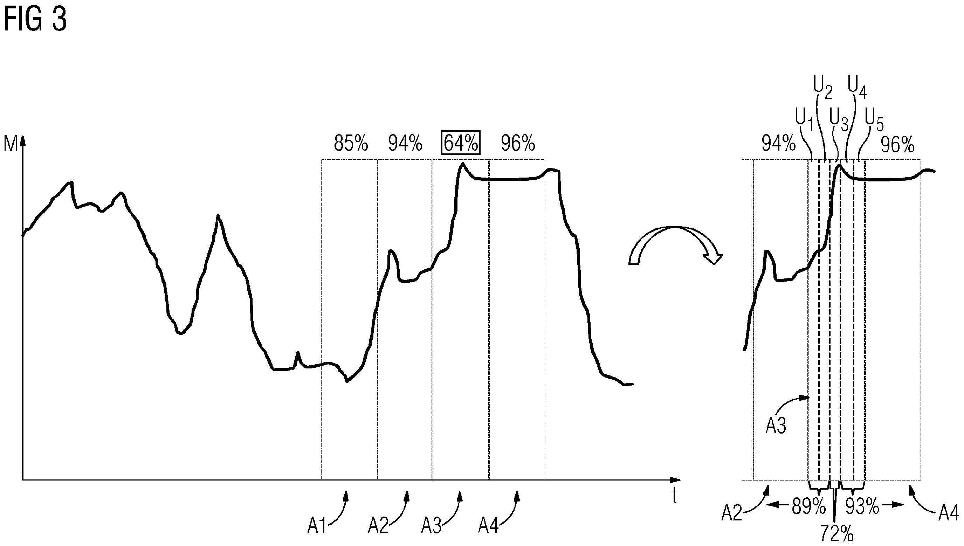

Die Nachbearbeitung ist schematisch in FIG 3 dargestellt. Links in FIG 3 ist der zeitliche Verlauf einer Messgröße M der Anlage 6 als Funktion der Zeit t gezeigt. Beispielhaft sind vier Fenster A1, A2, A3, A4 gezeigt, denen mittels des Klassifizierungsmoduls 10 jeweilige Wahrscheinlichkeiten für die korrekte Klassenzuordnung, beispielsweise 85 Prozent, 94 Prozent, 64 Prozent und 96 Prozent zugeordnet wurden. In diesem Beispiel kann der Grenzwert bei 84 Prozent liegen, sodass die Fenster A1, A2 und A4 nicht nachbearbeitet werden müssen, die Wahrscheinlichkeit des Fensters A3 jedoch unterhalb des Grenzwerts liegt und daher nachbearbeitet wird.

Rechts in FIG 3 sind das Fenster A3, welches gemäß dem beschriebenen Verfahren in beispielsweise fünf Unterfenster U1, U2, U3, U4, U5 aufgeteilt wurde, sowie die an das Fenster A3 angrenzenden Fenster A2 und A4 dargestellt. Nach einer erneuten Klassifizierung der Unterfenster U1 bis U5 ergibt sich beispielsweise für die Fenster U1 und U2 eine Klassenwahrscheinlichkeit von etwa 89 Prozent und für die Fenster U4 und U5 eine Klassenwahrscheinlichkeit von 93 Prozent. Dabei werden die Fenster U1 und U2 beispielweise derselben Klasse zugeordnet wie das Fenster A2 und die Fenster U4 und U5 werden beispielsweise derselben Klasse zugeordnet wie das Fenster A4.

Das Fenster U3 weist immer noch eine Klassenwahrscheinlichkeit auf, die unterhalb des Grenzwertes von 84 Prozent liegt, beispielsweise bei 72 Prozent. Entsprechend hat sich die Klassenwahrscheinlichkeit der Fenster U1, U2, U4 und U5 signifikant gegenüber der Wahrscheinlichkeit des Fensters A3 von 64 Prozent verbessert, insbesondere bedeutet signifikant in diesem Zusammenhang, dass die Klassenwahrscheinlichkeit nun oberhalb des Grenzwerts liegt, während sich die Klassenwahrscheinlichkeit für das Fenster U3 nicht signifikant verbessert hat. Dies lässt darauf schließen, dass in dem Fenster A3 tatsächlich ein echter Klassenübergang vorlag, insbesondere im Unterfenster U3 vorliegt.

Die Schritte der Klassifizierung und der Nachbearbeitung können gegebenenfalls iterativ durchgeführt werden, bis ein ausreichend gutes Ergebnis vorliegt.

Beispielsweise kann mittels eines Überprüfungsmoduls 12 überprüft werden, ob der vorgegebene Anteil, im beschriebenen Beispiel etwa fünf Prozent, für die konkrete Analyse eine sinnvolle oder gute Annahme war. Die ursprüngliche Hypothese war, dass diejenigen Fenster, die zu den fünf Prozent am schlechtesten klassifizierten Fenstern gehören, Klassenübergänge beinhalteten. Es ist aber möglich, dass in diesen fünf Prozent auch schlecht zu klassifizierende Fenster liegen, ohne dass ein Klassenübergang in diesem Fenster liegt, und dass beispielsweise eine andere Ursache vorliegt, wie etwa eine nicht optimale Merkmalsextraktion.

Mittels des Überprüfungsmoduls 12 kann geprüft werden, wie hoch der Anteil derjenigen nachbearbeiteten Fenster ist, in denen tatsächlich ein Klassenübergang vorlag. Dazu können die entsprechenden Klassenwahrscheinlichkeiten der nachbearbeiteten Unterfenster mit den jeweiligen Klassenwahrscheinlichkeiten der Fenster, aus denen die Unterfenster hervorgehen, verglichen werden.

Betrachtet man beispielsweise, wie bezüglich FIG 3 beschrieben, die fünf Unterfenster U1 bis U5, wobei in vier von den fünf Unterfenstern U1, U2, U4, U5 die Wahrscheinlichkeit für eine korrekte Klassifizierung signifikant ansteigt und in dem verbleibenden Unterfenster U3 keine deutliche signifikante Verbesserung der Klassenwahrscheinlichkeit auftritt, ist das nachbearbeitete Fenster A3 mit hoher Wahrscheinlichkeit ein Fenster mit einem Klassenübergang. In dieser Weise kann geprüft werden, die hoch der Anteil an tatsächlichen Klassenübergängen innerhalb der fünf Prozent am schlechtesten klassifizierten Fenster ist.

Beispielsweise können alle nachbearbeiteten Fenster einen Klassenübergang beinhalten. In einem solchen Fall kann der vorgegebene Anteil erhöht werden, beispielsweise auf sechs Prozent und das Verfahren erneut durchgeführt werden, da wahrscheinlich nicht alle Klassenübergänge berücksichtigt wurden. Sind von den fünf Prozent der am schlechtesten klassifizierten Fenster jedoch beispielsweise nur wenige, etwa zehn Prozent, solche mit tatsächlichen Klassenübergängen, kann der vorgegebene Anteil verringert werden, zum Beispiel auf vier Prozent und das Verfahren ebenfalls nochmals durchgeführt werden.

Die beschriebenen Schritte des Überprüfungsmoduls 12 können gegebenenfalls iterativ ausgeführt werden, bis sich keine Verbesserung oder keine signifikante Verbesserung des gesamten Analyseergebnisses mehr ergibt.

Bei einer Optimierung, wie sie hier beschrieben wurde, ist insbesondere keine manuelle Bewertung durch einen Benutzer erforderlich. Mittels eines Evaluierungsmoduls 13 kann das Verhalten oder der Zustand der Maschine 6 basierend auf den Klassen, die den Fenstern beziehungsweise Unterfenstern zuletzt zugeordnet wurden, ausgewertet werden.

Gemäß dem verbesserten Konzept kann automatisch der Grenzwert des Wahrscheinlichkeitskennwertes für diejenigen Datenfolgen angegeben werden, die nachbearbeitet werden sollen oder müssen. Es ist keine manuelle Vorgabe nötig, da nach dem verbesserten Konzept selbständig ermittelt werden kann, welche Datenfolgen nachbearbeitet werden müssen und der richtige Grenzwert gegebenenfalls iterativ bestimmt werden kann. Durch das verbesserte Konzept wird also das gesamte Klassifizierungsergebnis verbessert, indem eine höhere Trennschärfe zwischen den einzelnen Klassen erreicht wird. Dazu wird beispielsweise in verschiedenen Ausführungsformen die Auflösung der Klassifizierung nur an den Stellen erhöht, an denen es nötig ist. Dadurch werden Rechenressourcen eingespart und es kann die optimal bestimmte Fenstergröße für eine weitere Analyse verwendet werden.

Insbesondere kann das Verfahren nach dem verbesserten Konzept als Trainingsverfahren aufgefasst werden, wobei die Datenfolgen Trainingsdaten sein können und diejenige Fenstergröße oder Klassengröße oder Klassifizierungsparameter, die nach Abschluss aller gegebenenfalls durchgeführten Iterationen zuletzt verwendet wurden beziehungsweise die Grenzwerte und vorgegebenen Anteile, die zuletzt verwendet wurden, können als Ergebnis des Trainingsverfahrens aufgefasst werden und zu einer Laufzeit des Systems, eines analogen, eines ähnlichen oder eines vergleichbaren Systems verwendet werden.

Mit Vorteil werden nach dem verbesserten Konzept sowohl die Nachbearbeitung der entsprechenden Datenfolgen als auch ein Erfolg der Nachbearbeitung automatisch durchgeführt.

Durch die Überprüfung des Ergebnisses der Nachbearbeitung kann das Analysesystem beziehungsweise das Verfahren nach dem verbesserten Konzept selbstoptimierend sein und iterativ den besten Grenzwert für die Nachbearbeitung finden. Insbesondere ist zur Analyse des Systems unter Einsatz des verbesserten Konzepts nicht notwendigerweise ein Datenanalyst oder ein Domainexperte erforderlich.

### Bezugszeichenliste

- 1: Computersystem
- 2: Datenschnittstelle
- 3: Recheneinheit
- 4: Mikroprozessor
- 5: Ein- und Ausgabegerät
- 6: System
- 7: Sensorvorrichtung
- 8: Vorverarbeitungsmodul
- 9: Grenzwertmodul
- 10: Klassifizierungsmodul
- 11: Nachbearbeitungsmodul
- 12: Überprüfungsmodul
- 13: Evaluierungsmodul
- A1, A2, A3, A4: Fenster
- U1, U2, U3, U4, U5: Unterfenster

## Patentansprüche

1. Computerimplementiertes Verfahren zur Analyse eines Systems (6), wobei
eine Vielzahl von Datenfolgen, welche ein Verhalten oder einen Zustand des Systems (6) beschreiben, mittels einer Datenschnittstelle (2) bereitgestellt wird;
jeder der Datenfolgen mittels eines Klassifizierungsmoduls (9) durch Anwendung eines Klassifizierungsverfahrens jeweils eine Klasse und ein zugehöriger Wahrscheinlichkeitskennwert zugeordnet werden;
**dadurch gekennzeichnet, dass**
mittels eines Grenzwertmoduls (10) ein Grenzwert ermittelt wird, sodass ein vorgegebener Anteil der Datenfolgen jeweils einen Wahrscheinlichkeitskennwert aufweist, der kleiner ist als der Grenzwert; und
auf diejenigen der Datenfolgen, deren Wahrscheinlichkeitskennwert kleiner ist als der Grenzwert, mittels eines Nachbearbeitungsmoduls (11) ein weiteres Klassifizierungsverfahren angewandt wird.

2. Computerimplementiertes Verfahren nach Anspruch 1, **dadurch gekennzeichnet, dass**
zum Ermitteln des Grenzwertes die Datenfolgen entsprechend ihres jeweiligen Wahrscheinlichkeitskennwerts sortiert werden;
eine Gruppe derjenigen Datenfolgen mit den geringsten Wahrscheinlichkeitskennwerten identifiziert wird, sodass ein Anteil der Gruppe an der Vielzahl von Datenfolgen dem vorgegebenen Anteil entspricht; und
der Grenzwert als ein maximaler Wahrscheinlichkeitskennwert der Gruppe von Datenfolgen bestimmt wird.

3. Computerimplementiertes Verfahren nach Anspruch 1, **dadurch gekennzeichnet, dass**
zum Ermitteln des Grenzwertes ein Testwert festgelegt wird; ein Quotient aus der Anzahl von Datenfolgen, denen ein Wahrscheinlichkeitskennwert zugeordnet wurde, der kleiner ist als der Testwert, und der Anzahl aller Datenfolgen der Vielzahl berechnet wird; und
der Grenzwert dem Testwert gleichgesetzt wird, falls der Quotient gleich dem vorgegebenen Anteil ist.

4. Computerimplementiertes Verfahren nach einem der Ansprüche 1 bis 3, **dadurch gekennzeichnet, dass**
die Anwendung des weiteren Klassifizierungsverfahrens auf eine der Datenfolgen folgende Schritte aufweist:
Aufteilen der jeweiligen Datenfolge in wenigstens zwei Unterfolgen; und
Zuordnen einer Klasse und eines zugehörigen Wahrscheinlichkeitskennwerts zu jeder der wenigstens zwei Unterfolgen.

5. Computerimplementiertes Verfahren nach einem der Ansprüche 1 bis 4, **dadurch gekennzeichnet, dass**
der vorgegebene Anteil in Abhängigkeit von einem Ergebnis des weiteren Klassifizierungsverfahrens mittels eines Überprüfungsmoduls (12) angepasst wird; und
mittels des Grenzwertmoduls (10) ein angepasster Grenzwert ermittelt wird, sodass ein Anteil der Datenfolgen, welcher dem angepassten Anteil entspricht, jeweils einen Wahrscheinlichkeitskennwert aufweist, der kleiner ist als der angepasste Grenzwert; und
auf diejenigen der Datenfolgen, deren Wahrscheinlichkeitskennwert kleiner ist als der angepasste Grenzwert, mittels des Nachbearbeitungsmoduls (11) das weitere Klassifizierungsverfahren angewandt wird.

6. Computerimplementiertes Verfahren nach Anspruch 5 und Anspruch 4, **dadurch gekennzeichnet, dass**
ein Wahrscheinlichkeitskennwert wenigstens einer der wenigstens zwei Unterfolgen mit dem Wahrscheinlichkeitskennwert der Datenfolge, welche in die wenigstens zwei Unterfolgen aufgeteilt wurde, verglichen wird; und
der vorgegebene Anteil in Abhängigkeit von einem Ergebnis des Vergleichs angepasst wird.

7. Computerimplementiertes Verfahren nach einem der Ansprüche 1 bis 6, **dadurch gekennzeichnet, dass**
mit dem Wahrscheinlichkeitskennwert einer Datenfolge eine Wahrscheinlichkeit dafür beschrieben wird, dass die der jeweiligen Datenfolge zugeordnete Klasse korrekt zugeordnet wurde.

8. Computerimplementiertes Verfahren nach einem der Ansprüche 1 bis 7, **dadurch gekennzeichnet, dass** das Klassifizierungsmodul (9) ein Verfahren zum maschinellen Lernen, beispielsweise basierend auf einer Stützvektormaschine und/oder einem künstlichen neuronalen Netz und/oder einem k-means Klassifizierer, zur Anwendung des Klassifizierungsverfahrens einsetzt.

9. Computerimplementiertes Verfahren nach einem der Ansprüche 1 bis 8, **dadurch gekennzeichnet, dass**
die Vielzahl von Datenfolgen mittels einer Steuereinheit (14) zur Steuerung des Systems (6) bereitgestellt wird; oder
die Vielzahl von Datenfolgen mittels einer Datenbank (15) des Systems (6) bereitgestellt wird.

10. Computerimplementiertes Verfahren nach einem der Ansprüche 1 bis 9, **dadurch gekennzeichnet, dass**
mittels einer Sensorvorrichtung (7) eine Messgröße des Systems (6) gemessen wird, um die Vielzahl von Datenfolgen zu erzeugen.

11. Computerimplementiertes Verfahren nach einem der Ansprüche 1 bis 10, **dadurch gekennzeichnet, dass**
für jede der Datenfolgen wenigstens zwei statistische Kenngrößen mittels eines Vorverarbeitungsmoduls (8) gemäß einem vorgegebenen Parametersatz bestimmt werden;
die statistischen Kenngrößen mittels des Vorverarbeitungsmoduls (8) gemäß dem Parametersatz gewichtet werden;
die Klasse und der Wahrscheinlichkeitskennwert gemäß dem Parametersatz und basierend auf den gewichteten statistischen Kenngrößen der jeweiligen Datenfolge zugeordnet werden.

12. Computerimplementiertes Verfahren nach Anspruch 11, **dadurch gekennzeichnet, dass**
zwei oder mehr der wenigstens zwei statistischen Kenngrößen einem vorgegebenen Merkmalsblock zugeordnet sind und die Gewichtung der zwei oder mehr dem Merkmalsblock zugeordneten statistischen Kenngrößen mit einem gemeinsamen Gewichtungsfaktor des Parametersatzes durchgeführt wird.

13. Computerimplementiertes Verfahren nach einem der Ansprüche 1 bis 12, **dadurch gekennzeichnet, dass**
mittels eines Evaluierungsmoduls (13) das Verhalten oder der Zustand des Systems (6) basierend auf den Klassen, welche den Datenfolgen zugeordnet wurden, und/oder basierend auf einem Ergebnis des weiteren Klassifizierungsverfahrens ausgewertet wird.

14. Analysesystem mit einem Computersystem (1);
das Computersystem (1) aufweisend
eine Datenschnittstelle (2), die dazu eingerichtet ist, eine Vielzahl von Datenfolgen, welche ein Verhalten oder einen Zustand eines Systems (6) beschreiben, zu erfassen; und
eine Recheneinheit (3), die dazu eingerichtet ist, jeder der Datenfolgen mittels eines Klassifizierungsmoduls (9) durch Anwendung eines Klassifizierungsverfahrens jeweils eine Klasse und einen zugehörigen Wahrscheinlichkeitskennwert zuzuordnen;
**dadurch gekennzeichnet, dass**
die Recheneinheit (3) dazu eingerichtet ist,
mittels eines Grenzwertmoduls (10) einen Grenzwert zu ermitteln, sodass ein vorgegebener Anteil der Datenfolgen jeweils einen Wahrscheinlichkeitskennwert aufweist, der kleiner ist als der Grenzwert; und
auf diejenigen der Datenfolgen, deren Wahrscheinlichkeitskennwert kleiner ist als der Grenzwert, mittels eines Nachbearbeitungsmoduls (11) ein weiteres Klassifizierungsverfahren anzuwenden.

15. Computerprogramm, welches Befehle aufweist, die, bei Ausführung des Computerprogramms durch ein Computersystem, insbesondere eines Analysesystems nach Anspruch 14, das Computersystem dazu veranlassen, ein Verfahren nach einem der Ansprüche 1 bis 13 durchzuführen.
